# EUROPÄISCHE PATENTSCHRIFT

(11) **EP 1 181 575 B1**
(45) Veröffentlichungstag und Bekanntmachung des Hinweises auf die Patenterteilung: **08.10.2003**
(21) Anmeldenummer: 00940180.3
(22) Anmeldetag: 10.05.2000
(51) Int. Cl.: G01S 13/93, G01S 13/18, G01S 7/282

(54) **VORRICHTUNG ZUR DETEKTION VON OBJEKTEN IN DER UMGEBUNG EINES FAHRZEUGS**
DEVICE FOR DETECTING OBJECTS IN THE AREA SURROUNDING A VEHICLE
DISPOSITIF POUR LA DETECTION D'OBJETS DANS L'ENVIRONNEMENT D'UN VEHICULE

(30) Priorität: 11.05.1999 DE 19921844
(43) Veröffentlichungstag der Anmeldung: 27.02.2002
(73) Patentinhaber: ROBERT BOSCH GMBH, 70442 Stuttgart (DE)
(72) Erfinder: MEIER, Thomas, D-13591 Berlin (DE)
(86) Internationale Anmeldenummer: DE0001461
(87) Internationale Veröffentlichungsnummer: WO00068707

(56) Entgegenhaltungen:
- EP-A- 0 473 082
- EP-A- 0 758 093
- US-A- 4 450 445
- US-A- 5 828 333

## Beschreibung

### Stand der Technik

Die vorliegende Erfindung betrifft eine Vorrichtung zur Detektion von Objekten in der Umgebung eines Fahrzeugs mittels Pulsradar, welche einen Sender aufweist, der Senderimpulse abstrahlt, und einen Empfänger besitzt, der die an Objekten reflektierten Empfangsimpulse auswertet. Eine solche Vorrichtung, die auf dem bekannten Pulsradar-Prinzip beruht ist z.B. aus der DE-OS 28 35 867 bekannt.

Mit einer Pulsradarvorricheung lassen sich Abstände von Objekten sehr exakt bestimmen, deshalb eignet sich eine auf dem Pulsradar basierende Vorrichtung in Fahrzeugen z.B. als Einparkhilfe oder als Precrash-Sensor oder zur Detektion von Objekten im Bereich des sog. toten Winkels. Bei all diesen Einsatzfällen soll die nähere Umgebung eines Fahrzeugs daraufhin überwacht werden, ob sich Kollisionshindernisse in diesem Bereich befinden und welchen Abstand diese Hindernisse zum Fahrzeug haben. Radarsensoren, die den Nahbereich des Fahrzeugs überwachen, werden als Nahbereichsradar (Short Range Radar) bezeichnet. Insbesondere bei einem Nahbereichsradar tritt das Problem auf, daß die an Objekten in einem sehr kleinen Abstand reflektierten Signale zu einem Übersteuern im Empfänger führen. Außerdem kann ein internes Übersprechen von der Sende- auf die Empfangsseite und eine daraus entstehende Störspannung im Empfänger nicht ganz vermieden werden. Dieses Übersprechen führt dazu, daß eine Detektion von Objekten im Bereich sehr kleiner Entfernungen kaum möglich ist. Denn die Laufzeit einer von einem sehr nahen Objekt reflektierten Welle stimmt in etwa mit der Laufzeit übersprechender Signale überein, so daß dem reflektierten Empfangssignal das Übersprechsignal überlagert wird. Die Messung von Signalen, die an gering beabstandeten Objekten reflektiert werden, wird somit verfälscht.

Der Erfindung liegt daher die Aufgabe zugrunde, eine Vorrichtung der eingangs genannten Art anzugeben, mit der auch Objekte in einem sehr geringen Abstand zum Fahrzeug fehlerfrei detektiert werden können und gleichfalls eine sichere Detektion von entfernter liegenden Objekten möglich ist.

### Vorteile der Erfindung

Die genannte Aufgabe wird mit den Merkmalen des Anspruchs 1 dadurch gelöst, daß Mittel vorhanden sind, mit denen eine Selektion derjenigen Empfangsimpulse durchführbar ist, deren zeitlicher Versatz gegenüber den Sendeimpulsen jeweils so groß ist, daß diese Empfangssignale ausschließlich aus Reflektionen an Objekten aus einem ausgewählten, mit dem zeitlichen Versatz korrelierenden Abstandsbereich resultieren, und daß weitere Mittel vorgesehen sind, mit denen die Sendeimpulsleistung mit zunehmendem bzw. abnehmendem Abstandsbereich erhöht bzw. verringert wird. Wird nämlich die Sendeimpulsleistung für die Detektion von Objekten in einem sehr nahen Abstand zum Fahrzeug gering gehalten, so führen reflektierte Signale nicht zu einem Übersteuern des Empfängers und außerdem wird das Übersprechen zwischen Sender und Empfänger so stark abgeschwächt, daß an nahen Objekten reflektierte Empfangsimpulse fehlerfrei erkannt werden können. Wird zur Detektion von Objekten in einem entfernteren Abstandsbereich die Leistung der Sendeimpulse erhöht, so weisen selbst an kleinen Objekten reflektierte Empfangssignale noch eine so hohe Leistung auf, die eine Detektion im Empfänger ermöglicht.

Vorteilhafte Weiterbildungen der Erfindung gehen aus den Unteransprüchen hervor. Die Selektion von Empfangsimpulsen erfolgt vorzugsweise mit einem Mischer, an dem einerseits die von einer Antenne aufgenommenen Empfangsimpulse und andererseits Referenzsignalimpulse anliegen, welche gegenüber den Sendeimpulsen eine dem ausgewählten Abstandsbereich entsprechende Zeitverzögerung aufweisen.

Für die Bildung der Sendeimpulse und der Referenzsignalimpulse können Pulsformer vorgesehen werden, welche einen von einem Oszillator gelieferten Hochfrequenzsignalträger pulsförmig modulieren. Eine sehr einfache pulsförmige Modulation des Hochfrequenzsignalträgers erfolgt vorzugsweise mittels jeweils eines für die Sendeimpulse und für die Referenzsignalimpulse vorhandenen elektrisch steuerbaren Schalters, der, vom jeweiligen Pulsformer gesteuert, den Hochfrequenzsignalträger auf eine Sendeantenne bzw. auf den Mischer durchschaltet.

Es ist vorteilhaft, den Hochfrequenzsignalträger für die Sendeimpulse und auch den Hochfrequenzsignalträger für die Refererizsignalimpulse mittels eines Leistungsteilers aus einem einzigen Oszillatorsignal abzuleiten.

Die Mittel zur Steuerung der Sendeimpulsleistung steuern die Impulsamplitude und/oder die Impulsbreite. Die Steuerung der Impulsbreite kann z.B. durch Veränderung der Öffnungszeiten der Schalter erfolgen. Die Steuerung der Impulsamplitude der Sendeimpulse kann mittels eines variablen Dämpfungsgliedes erfolgen oder durch Veränderung des Arbeitspunktes des Oszillators.

Ein verbessertes Signal-Rausch-Verhältnis der Empfangsimpulse kann dadurch erreicht werden, daß der Empfänger eine Integration mehrerer aus einem jeweils ausgewählten Abstandsbereich stammender Empfangssignale durchführt.

### Beschreibung eines Ausführungsbeispiels

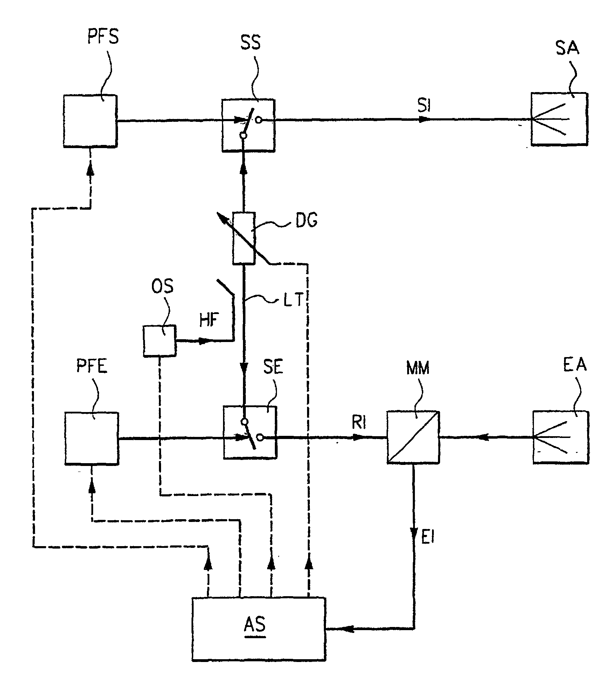

Anhand eines in der Zeichnung dargestellten Ausführungsbeispiels wird nachfolgend die Erfindung näher erläutert.

Die einzige Figur der Zeichnung zeigt ein Prinzipschaltbild einer Pulsradar-Vorrichtung, wie sie in einem Fahrzeug eingesetzt wird, um Objekte in seiner näheren Umgebung detektieren zu können. Die Pulsradar-Vorrichtung weist einen Sendezweig mit einem Pulsformer PFS, einem von diesem steuerbaren Schalter SS und einer Sendeantenne SA auf. Im Empfangszweig befindet sich ein Impulsformer PFE, der einen Schalter SE steuert, ein Mischer MM und eine Empfangsantenne EA. Beiden Schaltern SS und SE im Sendezweig und im Empfangszweig wird ein Hochfrequenzsignalträger HF zugeführt. Der Hochfrequenzsignalträger HF ist das Ausgangssignal eines Oszillators OS, das über einen Leistungsteiler LT (z.B. 3-dB-Koppler) leistungsmäßig auf die beiden Schalter SS und SE im Signalzweig und im Empfangszweig aufgeteilt wird.

Der an dem Schalter SS im Sendezweig anliegende Hochfrequenzsignalträger HF wird dadurch einer pulsförmigen Amplitudenmodulation unterzogen, daß die vom Impulsformer PFS abgegebenen Impulse den Schalter SS im Takt der Impulse schließen und öffnen. Dadurch entsteht am Ausgang des Schalters SS eine Impulsfolge des Hochfrequenzsignalträgers HF, welche als Sendeimpulse über die Sendeantenne SA abgestrahlt wird.

Die an Objekten in der Umgebung des Fahrzeugs reflektierten Empfangssignalpulse werden von der Empfangsantenne EA aufgenommen und einem ersten Eingang eines Mischers MM zugeführt. An dem zweiten Eingang des Mischers MM liegt ebenfalls eine Impulsfolge des Hochfrequenzsignalträgers HF an. Diese Impulsfolge entsteht dadurch, daß der Schalter SE im Empfangszweig, an dem der Hochfrequenzsignalträger HF anliegt, von der Impulsfolge des Impulsformers PFE angesteuert wird. Am Ausgang des Mischers MM erscheinen dann Empfangsimpulse EI, wenn zwischen den von der Empfangsantenne EA kommenden Empfangsimpulsen und den vom Schalter SE zugeführten Referenzimpulsen RI zeitliche Synchronität besteht. Somit können also durch Wahl der zeitlichen Lage der Referenzimpulse RI bestimmte von der Empfangsantenne EA kommende Empfangsimpulse EI an den Ausgang des Mischers MM durchgeschaltet werden. Durch Vorgabe des zeitlichen Versatzes zwischen den ausgestrahlten Sendeimpulsen SI und den Referenzimpulsen RI können nun Empfangsimpulse EI, deren Laufzeiten dem zeitlichen Versatz zwischen den Sendeimpulsen SI und den Referenzimpulsen RI entsprechen,-selektiert werden. Das bedeutet, daß bestimmte Abstandsbereiche ausgewählt werden können, in denen an Objekten reflektierte Empfangsimulse EI erfaßt werden sollen. Somit ist also eine entfernungsabhängige Detektion von Objekten möglich.

Eine Auswerteschaltung AS, der die am Ausgang des Mischers MM zur Verfügung stehenden Empfangsimpulse EI zugeführt werden, steuert, wie durch die strichliert gezeichneten Steuerleitungen angedeutet, die Impulsformer PFS und PFE im Sende- und im Empfangszweig in der Weise an, daß der zeitliche Versatz zwischen den Sendeimpulsen SI und den Referenzsignalimpulsen RI von einem kleinen Wert auf einen größeren Wert ansteigt. Wie bereits beschrieben, ist der zeitliche Versatz zwischen den Sendeimpulsen SI und den Referenzsignalimpulsen RI dafür verantwortlich, aus welchem Abstandsbereich an darin befindlichen Objekten reflektierte Empfangsimpulse EI detektiert werden. Mit ansteigendem zeitlichem Versatz zwischen den Sendeimpulsen SI und den Referenzsignalimpulsen RI wird also die Umgebung des Fahrzeugs, beginnend mit einem sehr geringen Abstandsbereich bis hin zu einem größeren Abstandsbereich, auf Objekte abgetastet.

In nahen Abstandsbereichen führen Sendeimpulse SI mit zu hoher Signalleistung dazu, daß die daraus resultierenden Empfangsimpulse im Empfänger vorhandene Verstärker übersteuern. Ein weiteres Problem entsteht durch internes Übersprechen vom Sendezweig auf den Empfangszweig. Ein solches Übersprechen führt dazu, daß eine Detektion von Objekten im Bereich kleiner Entfernungen (Abstand kleiner als ca. 20cm) fast nicht möglich ist, da die Laufzeit der an nahen Objekten reflektierten Wellen in etwa der Laufzeit der vom Sendezweig auf den Empfangszweig übersprechenden Wellen entspricht. Durch diesen unerwünschten Effekt erhält man am Ausgang des Mischers MM Empfangsimpulse EI, die erheblich gestört sind, wodurch keine fehlerfreie Detektion von Objekten in nahen Abstandsbereichen möglich ist. Um diese im Nahbereich auftretenden Störungen zu vermeiden, wird die Leistung der Sendeimpulse SI, wenn es um die Detektion von Objekten in geringen Abstandsbereichen geht, reduziert. Vergrößert sich aber der detektierte Abstandsbereich, so wird die Leistung der Sendeimpulse SI erhöht, so daß selbst an kleinen Objekten in entfernteren Abstandsbereichen reflektierte Empfangsimpulse EI noch mit einem ausreichend guten Signal-Rausch-Verhältnis empfangen werden können. Die Auswerteschaltung AS steuert also die Sendeimpulsleistung so, daß sie bei kleinen Abstandsbereichen mit einem niedrigen Wert beginnt und mit zunehmenden Abstandsbereichen ansteigt.

Die Sendeimpulsleistung kann dadurch gesteuert werden, daß die Impulsamplitude und/oder die Impulsbreite verändert wird. Es ist zweckmäßig, gerade in nahen Abstandsbereichen Sendeimpulse SI mit einer geringen Impulsbreite abzustrahlen, weil damit eine höhere räumliche Auflösung, wie sie insbesondere bei dicht benachbarten Objekten erwünscht ist, möglich ist. In größeren Entfernungen ist unter Umständen eine hohe Auflösung bei der Detektion von Objekten nicht erforderlich, so daß hier eine Erhöhung der Sendeimpulsleistung durch Vergrößerung der Impulsbreite erfolgen kann. Die Ansteuerschaltung AS steuert die Impulsamplitude und die Impulsbreite der Sendeimpulse SI so, daß einerseits mit zunehmendem bzw. abnehmendem Abstandsbereich die Sendeimpulsleistung erhöht bzw. verringert wird, wobei sie Anforderung an eine räumliche Auflösung der zu detektierenden Objekte berücksichtigt.

Die Steuerung der Sendeimpulsweite erfolgt in dem Impulsformer PFS, der bei einer größeren Impulsbreite eine längere Öffnungszeit des Schalters SS und bei einer schmaleren Impulsbreite eine kürzere Öffnungszeit des Schalters SS veranlaßt. Für die Steuerung der Sendeimpulsamplitude gibt es mehrere Möglichkeiten. Es kann z.B. der Arbeitspunkt des Oszillators verändert werden. Eine andere Möglichkeit besteht darin, ein variables Dämpfungsglied DG in den Signalweg des Hochfrequenzsignalträgers HF einzufügen, dessen Dämpfung von der Ansteuerschaltung AS gesteuert wird.

Die Schalter SS und SE wird man zweckmäßigerweise als Transistorschalter (FET-Transsistoren) ausführen, so daß durch Steuerung der Vorspannung des Transistors im Sendezweig eine Steuerung der Amplitude der am Ausgang des Transistors anliegenden Sendeimpulse SI realisierbar ist.

Für die Auswertung der Empfangsimpulse EI in der Auswerteschaltung AS können an sich bekannte Methoden verwendet werden, z.B. Schwellwertauswertungen oder Frequenzauswertungen. Es ist zweckmäßig, für die Signalauswertung mehrere Empfangsimpulse EI aus mehreren Meßzyklen zu integrieren, um das Signal-Rausch-Verhältnis zu verbessern. Außerdem wird dadurch eine niederfrequente Signalauswertung möglich.

## Patentansprüche

1. Vorrichtung zur Detektion von Objekten in der Umgebung eines Fahrzeugs mittels Pulsradar, welche einen Sender aufweist, der Sendeimulse abstrahlt und einen Empfänger besitzt, der die an Objekten reflektierten Empfangsimpulse auswertet, **dadurch gekennzeichnet, daß** Mittel (MM) vorhanden sind, mit denen eine Selektion derjenigen Empfangssignale (EI) durchführbar ist, deren zeitlicher Versatz gegenüber den Sendeimpulsen (SI) jeweils so groß ist, daß diese Empfangsimpulse (EI) ausschließlich aus Reflexionen an Objekten aus einem ausgewählten, mit dem zeitlichen Versatz korrelierenden Abstandsbereich resultieren, und daß weitere Mittel (DG) vorgesehen sind, mit denen die Sendeimpulsleistung mit zunehmendem bzw. abnehmendem Abstandsbereich erhöht bzw. verringert werden kann.

2. Vorrichtung nach Anspruch 1, **dadurch gekennzeichnet, daß** die Mittel zur Selektion von Empfangsimpulsen (EI) einen Mischer (MM) aufweisen, an dem einerseits die von einer Empfangsantenne (EA) aufgenommenen Empfangsimpulse (EI) und andererseits Referenzsignalimpulse (RI) anliegen, welche gegenüber den Sendeimpulsen (SI) eine dem ausgewählten Abstandsbereich entsprechende Zeitverzögerung aufweisen.

3. Vorrichtung nach Anspruch 1 oder 2, **dadurch gekennzeichnet, daß** für die Bildung der Sendeimpulse (SI) und der Referenzsignalimpulse (RI) Pulsformer (PFS, PFE) vorgesehen sind, welche einen von einem Oszillator (OS) gelieferten Hochfrequenzsignalträger (HF) pulsförmig modulieren.

4. Vorrichtung nach Anspruch 3, **dadurch gekennzeichnet, daß** die pulsförmige Modulation des Hochfrequenzsignalträgers (HF) mittels jeweils eines für die Sendeimpulse (SI) und für die Referenzsignalimpulse (RI) vorhandenen elektrisch steuerbaren Schalters (SS, SE) erfolgt, der, vom jeweiligen Pulsformer (PFS, PFE) gesteuert, den Hochfreguenzsignalträger (HF) auf eine Sendeantenne (SA) bzw. auf den Mischer (MM) durchschaltet.

5. Vorrichtung nach Anspruch 3 oder 4, **dadurch gekennzeichnet, daß** ein Leistungsteiler (LT) vorhanden ist, der aus einem einzigen Oszillatorsignal sowohl den Hochfrequenzsignalträger (HF) für die Sendeimpulse (SI) als auch den Hochfrequenzsignalträger (HF) für die Referenzsignalimpulse (RI) ableitet.

6. Vorrichtung nach Anspruch 1, **dadurch gekennzeichnet, daß** die Mittel zur Steuerung der Sendeimpulsleistung die Impulsamplitude und/oder die Impulsbreite steuern.

7. Vorrichtung nach Anspruch 4 oder 6, **dadurch gekennzeichnet, daß** die Steuerung der Impulsbreite durch Veränderung der Öffnungszeiten des Schalters (SS) im Sendezweig erfolgt.

8. Vorrichtung nach Anspruch 6, **dadurch gekennzeichnet, daß** die Steuerung der Impulsamplitude der Sendeimpulse (SI) mittels eines variablen Dämpfungsgliedes (DG) erfolgt.

9. Vorrichtung nach Anspruch 3 oder 6, **dadurch gekennzeichnet, daß** die Steuerung der Impulsamplitude der Sendeimpulse (SI) durch Veränderung des Arbeitspunktes des Oszillators (OS) erfolgt.

10. Vorrichtung nach Anspruch 1, **dadurch gekennzeichnet, daß** der Empfänger eine Integration mehrerer aus einem jeweils ausgewählten Abstandsbereich_stammender Empfangssignale (EI) durchführt.

## Claims

1. Device for detecting objects in the area surrounding a vehicle by means of pulsed radar, which device has a transmitter which radiates transmission pulses and a receiver which evaluates the reception pulses reflected at objects, **characterized in that** there are means (MM) with which it is possible to select those reception signals (EI) whose chronological offset with respect to the transmission pulses (SI) is so great in each case that these reception pulses (EI) result exclusively from reflection at objects from a selected distance range which correlates to the chronological offset, and **in that** further means (DG) are provided with which the transmission pulse power can be increased or reduced as the distance range increases or decreases.

2. Device according to Claim 1, **characterized in that** the means for selecting reception pulses (EI) have a mixer (MM) at which, on the one hand, the reception pulses (EI) recorded by a reception antenna (EI) and, on the other hand, the reference signal pulses (RI) which, with respect to the transmission pulses (SI), have a time delay which corresponds to the selected distance range, are present.

3. Device according to Claim 1 or 2, **characterized in that**, to form the transmission pulses (SI) and the reference signal pulses (RI), pulse shapers (PFS, PFE) are provided which modulate in pulse form a radio frequency signal carrier (HF) which is supplied by an oscillator (OS).

4. Device according to Claim 3, **characterized in that** the pulse-shaped modulation of the radio frequency signal carrier (HF) is carried out by means of, in each case, an electrically controllable switch (SS, SE) which is present for the transmission pulses (SI) and for the reference signal pulses (RI), and which, under the control of the respective pulse shaper (PFS, PFE), connects through the radio frequency signal carrier (HF) to a transmitting antenna (SA) and/or to the mixer (MM).

5. Device according to Claim 3 or 4, **characterized in that** there is a power divider (LT) which derives from a single oscillated signal both the radio frequency signal carrier (HF) for the transmission pulses (SI) and the radio frequency signal carrier (HF) for the reference signal pulses (RI).

6. Device according to Claim 1, **characterized in that** the means for controlling the transmission pulse power control the pulse amplitude and/or the pulse width.

7. Device according to Claim 4 or 6, **characterized in that** the pulse width is controlled by changing the opening times of the switch (SS) in the transmission branch.

8. Device according to Claim 6, **characterized in that** the pulse amplitude of the transmission pulses (SI) is controlled by means of a variable attenuator element (DG).

9. Device according to Claim 3 or 6, **characterized in that** the pulse amplitude of the transmission pulses (SI) is controlled by changing the working point of the oscillator (OS).

10. Device according to Claim 1, **characterized in that** the receiver carries out integration of a plurality of reception signals (EI) originating from a respectively selected distance range.

## Revendications

1. Dispositif pour la détection d'objets dans l'environnement d'un véhicule au moyen d'un radar pulsé, comprenant un émetteur qui émet des impulsions et un récepteur qui identifie les impulsions réfléchies par des objets,
**caractérisé en ce que**
des moyens sont prévus pour sélectionner les signaux reçus (EI) qui sont décalés dans le temps par rapport aux signaux émis (SI) suffisamment pour que ces impulsons reçues (EI) proviennent exclusivement de réflexions sur des objets situés dans une plage de distances corrélée au décalage temporel, et d'autres moyens (DG) sont également prévus pour augmenter ou diminuer la puissance des impulsions émises quand la plage des distances augmente ou diminue.

2. Dispositif selon la revendication 1,
**caractérisé en ce que**
les moyens de sélection des impulsions reçues (EI) comprennent un mélangeur (MM) auquel sont appliquées d'une part les impulsions reçues (EI) captée par une antenne de réception (EA) et d'autre part des impulsions de référence (RI) présentant par rapport aux impulsions émises (SI) un décalage temporel correspondant à la plage de distances sélectionnée.

3. Dispositif selon l'une quelconque des revendications 1 ou 2,
**caractérisé en ce qu'**
il est prévu, pour créer les impulsions émises (SI) et les impulsions des signaux de référence (RI), des modulateurs d'impulsion (PFS, PFE) qui transforment en impulsions un signal à haute fréquence (HF) produit par un oscillateur (OS).

4. Dispositif selon la revendication 3,
**caractérisé en ce que**
la modulation en impulsions du signal à haute fréquence (HF) est produite pour les impulsions émises (SI) et pour les impulsions du signal de référence (RI), par un contacteur à commande électronique (SS, SE) respectivement, qui, sous la commande du modulateur d'impulsions correspondant (PFS, PFE) commute le signal à haute fréquence (HF) sur une antenne émettrice (SA) ou sur le mélangeur (MM).

5. Dispositif selon l'une quelconque des revendications 3 ou 4,
**caractérisé en ce qu'**
il est prévu un séparateur de puissance (LT) qui d'un même signal d'oscillateur fait dériver à la fois le signal à haute fréquence (HF) destiné aux impulsions émises (SI) et le signal à haute fréquence (HF) destiné aux impulsions du signal de référence (EI).

6. Dispositif selon la revendication 1,
**caractérisé en ce que**
les moyens de commande de la puissance des impulsions émises commandent l'amplitude et/ou la durée d'impulsion;

7. Dispositif selon l'une quelconque des revendications 4 ou 6,
**caractérisé en ce que**
la commande de la durée d'impulsion s'effectue en faisant varier les temps d'ouverture du contacteur (SS) dans la branche d'émission.

8. Dispositif selon la revendication 6,
**caractérisé en ce que**
la commande de l'amplitude des impulsions émises (SI) a lieu par l'intermédiaire d'un organe d'amortissement variable (DG).

9. Dispositif selon l'une quelconque des revendications 3 ou 6,
**caractérisé en ce que**
la commande de l'amplitude des impulsions émises (SI) s'effectue en faisant varier le point de travail de l'oscillateur (OS).

10. Dispositif selon la revendication 1,
**caractérisé en ce que**
le récepteur effectue l'intégration de plusieurs signaux reçus (EI) provenant chaque fois d'une plage de distances sélectionnée.
